# EUROPEAN PATENT SPECIFICATION

(11) **EP 3 276 286 B1**
(45) Date of publication and mention of the grant of the patent: **20.10.2021**
(21) Application number: 17183345.2
(22) Date of filing: 26.07.2017
(51) Int. Cl.: F25D 19/00, F25D 23/00, B60H 1/32, B62D 35/00

(54) **TRANSPORT CHILLING UNIT**
TRANSPORTKÜHLEINHEIT
UNITÉ DE REFROIDISSEMENT DE TRANSPORT

(30) Priority: 27.07.2016 JP 2016147284
(43) Date of publication of application: 31.01.2018
(73) Proprietor: Mitsubishi Heavy Industries Thermal Systems, Ltd., Tokyo 108-8215 (JP)
(72) Inventor: HOSHI, Shintaro, TOKYO, 108-8215 (JP); NARITA, Sadaharu, TOKYO, 108-8215 (JP); HOKAZONO, Toshiyuki, TOKYO, 108-8215 (JP)
(74) Representative: Cabinet Beau de Loménie

(56) References cited:
- DE-A1- 3 916 692
- GB-A- 2 275 234
- JP-A- 2015 117 863
- JP-U- H0 221 034
- JP-U- S58 192 176
- KR-B1- 100 780 089

## Description

### BACKGROUND OF THE INVENTION

### 1. FIELD OF THE INVENTION

The present invention relates to a transport chilling unit.

### 2. DESCRIPTION OF RELATED ART

As one of transport chilling units mounted on a transport vehicle such as a chilled truck or a chilled trailer, there exists a sub-engine type transport chilling unit which mounts a dedicated sub-engine thereon as a power source. As such a chilling unit, there has been known a chilling unit where a space for housing a sub-engine and a space for housing a heat exchanger are separated from each other by a partition plate (for example, Japanese Unexamined Patent Application, Publication No. S62-91773 (hereinafter referred to as "JP S62-91773 A")).

In a chilling device for a container disclosed in JP S62-91773 A, a condenser, which is operated while radiating heat, is disposed in a space, and a front side of the space is defined by front panels. An intake grille is formed on the front panel, and outside air is taken in through the intake grille while passing the condenser so as to cool the condenser. The outside air whose temperature is increased due to cooling of the condenser is discharged through an exhaust grille formed on the front panel.
The Japanese Application, Publication No. 2015-117863 discloses a transport chilling unit.
KR 100 780 089 discloses a transport chilling unit according to the preamble of claim 1.

{PTL 1} Japanese Unexamined Patent Application, Publication No. S62-91773
{PTL 2} Japanese Application, Publication No. 2015-117863.
{PTL 3} South-Korean Patent No. KR 100 780 089

### BRIEF SUMMARY OF THE INVENTION

However, in the chilling device for a container disclosed in JP S62-91773 A, the intake grille is positioned in the vicinity of the exhaust grille and hence, there is a possibility that heated outside air discharged through the exhaust grille is taken in through the intake grille. When heated outside air is taken in through the intake grille, there exists a possibility that an adverse effect on operation point of a chilling cycle may be caused, thus increasing an input. There is also a possibility that an operation range may be narrowed due to the pressure rise under high load cooling operation or the like.

The present invention has been made in view of such circumstances, and it is an object of the present invention to provide a transport chilling unit to prevent an adverse effect on operation point of a chilling cycle and narrowing of an operation range under high load cooling operation.

A transport chilling unit according to the present invention is defined in claim 1. Preferred embodiments are disclosed in the dependent claims.

### BRIEF DESCRIPTION OF THE SEVERAL VIEWS OF THE DRAWINGS

FIG. 1 is a side view of a vehicle to which a transport Chilling unit according to the present invention is applied;
FIG. 2 is a plan view of the vehicle shown in FIG. 1;
FIG. 3 is a front schematic view showing the inside of the transport chilling unit shown in FIG. 1;
FIG. 4 is a cross-sectional view taken along a line A-A in FIG. 3;
FIG. 5 is a front view of the transport chilling unit shown in FIG. 1;
FIG. 6 is a plan view of the transport chilling unit shown in FIG. 5; and
FIG. 7 is a side view of the transport chilling unit shown in FIG. 5.

### DETAILED DESCRIPTION OF THE INVENTION

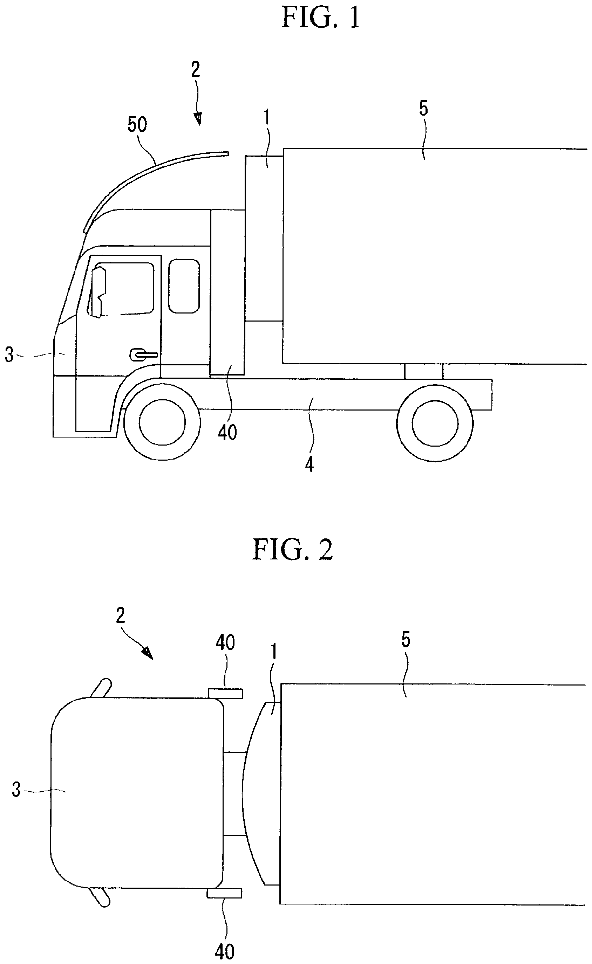

Hereinafter, the present invention is described with reference to drawings. As shown in FIG. 1 and FIG. 2, a vehicle 2 on which a chilling unit (transport chilling unit) 1 according to the present invention is mounted is a so-called cab-over type transport truck where a traveling engine (not shown in the drawing) is disposed below a cabin 3. A van trailer body 5 is mounted on a frame 4 extending in a longitudinal direction of the vehicle behind the cabin 3. The van trailer body 5 is mounted on the frame 4 with a front surface thereof spaced apart from a rear surface of the cabin 3. A cargo such as chilled/refrigerated goods is loaded into the van trailer body 5. Gap shields 40 are mounted on rear end portions of the cabin 3 on outer sides in a vehicle lateral direction. The gap shields 40 are provided for preventing traveling wind from flowing into a space defined between the cabin 3 and the chilling unit 1, thus reducing air resistance during the traveling of the vehicle. An air deflector 50 is mounted on an upper portion of the cabin 3. The air deflector 50 is provided for preventing impingement of traveling wind onto an upper portion of the chilling unit 1, thus reducing air resistance during the traveling of the vehicle. In FIG. 2, the air deflector 50 is omitted.

The chilling unit 1 is mounted on the front surface of the van trailer body 5 over substantially the whole region in the vehicle lateral direction. The chilling unit 1 is formed with a short length in the longitudinal direction of the vehicle so as not to affect a capacity of the van trailer body 5. A front surface of the chilling unit 1 is bent such that a length of the chilling unit 1 in the longitudinal direction of the vehicle gradually shortens from the center toward the outer sides of the chilling unit 1 in the vehicle lateral direction. That is, the chilling unit 1 has a shape where the cabin 3 and the chilling unit 1 do not interfere with each other when the vehicle 2 turns. The chilling unit 1 may be a sub-engine type transport chilling unit which mounts a dedicated sub-engine 10 thereon as a power source.

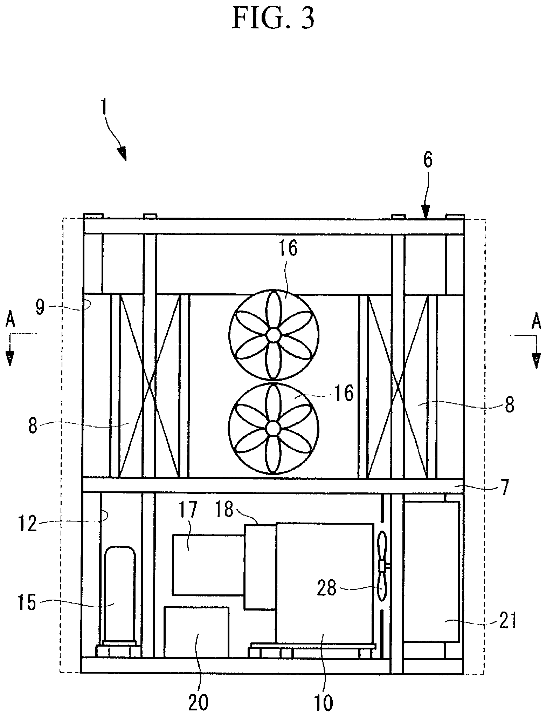

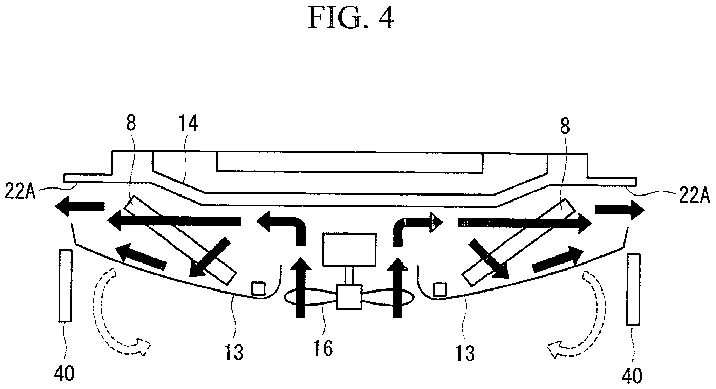

As shown in FIG. 3 and FIG. 4, the chilling unit 1 includes a casing 6 forming an outer shell of the chilling unit 1. The casing 6 includes a cover panel 11 and a partition wall 7 which partitions an inner space of the casing 6 into an upper space and a lower space. The upper space partitioned by the partition wall 7 forms a heat exchange room 9 where outdoor heat exchangers 8 are installed. The lower space forms an engine room 12 where the sub-engine 10 is installed.

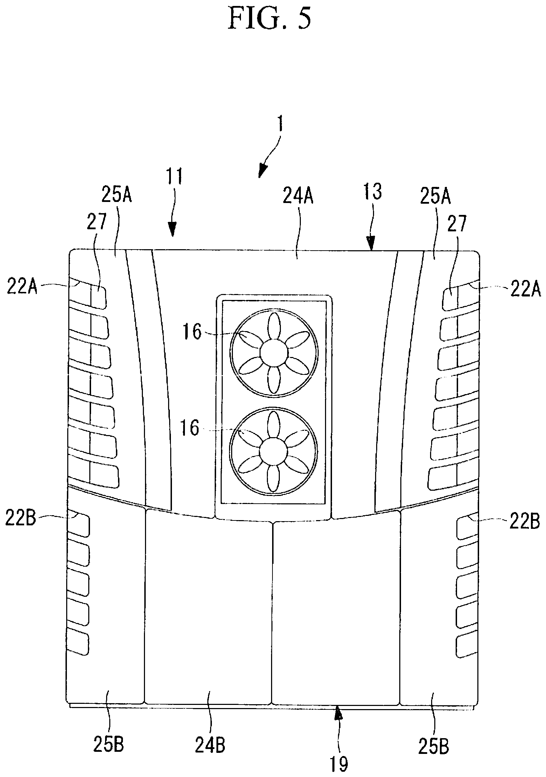

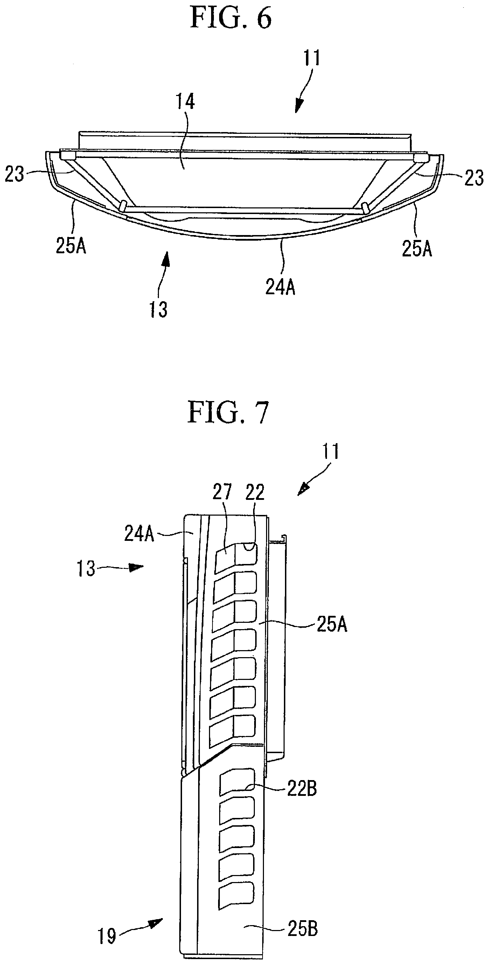

Next, the cover panel 11 is described with reference to FIG. 5 to FIG. 7. The cover panel 11 has a left-right symmetric structure with respect to the center of the cover panel 11 in the vehicle lateral direction. Accordingly, hereinafter, the description is made with respect to the structure of one side of the cover panel 11, and the detailed description of the structure of the other side of the cover panel 11 is omitted.

As shown in FIG. 5, the cover panel 11 is divided into an upper cover panel 13 forming an upper region of the cover panel 11, and a lower cover panel 19 forming a lower region of the cover panel 11. The upper cover panel 13 includes: a center portion 24A which is erected along the vehicle lateral direction at a front portion of the heat exchange room 9 and defines a front side of the heat exchange room 9; and side portions 25A which extend from end portions of the center portion 24A in the vehicle lateral direction toward rear outer sides in the vehicle lateral direction, and define lateral sides of the heat exchange room 9. An upper side of the heat exchange room 9 is formed of a part of a heat insulating wall 14.

Two fan openings arranged in a row in a vertical direction are formed in the center portion 24A of the upper cover panel 13 at substantially the center in the vehicle lateral direction. One outdoor heat exchanger fan (fan) 16 which is an axial flow fan is disposed in each fan opening. The outdoor heat exchanger fan 16 is provided for introducing outside air into the heat exchange room 9 described later.

Side outlet ports 22A are formed in each side portion 25A of the upper cover panel 13 such that the side outlet ports 22A extend frontward from an area in the vicinity of a rear end portion of the side portion 25A. The side outlet ports 22A are disposed at positions behind a rear end of the gap shield 40. Guide portions 27 are also formed on each side portion 25A such that each guide portion 27 extends from a front end portion of the side outlet port 22A toward an inner side in the vehicle lateral direction. The guide portions 27 are formed by press molding, injection molding or the like so as to be recessed from an inner surface of the side portion 25A toward the outside. The other end side (inner end side) of the guide portions 27 is positioned slightly below a sideoutlet-port-22A side (outer end side) of the guide portions 27. Air flows into recessed portions of the guide portions 27 and flows along a long side direction so that an air flow direction is guided. Seven side outlet ports 22A and seven guide portions 27 are formed in each side portion 25A such that the side outlet ports 22A and the guide portions 27 are respectively arranged in a vertical row. A size of the guide portions 27 are gradually increased from the uppermost guide portion 27 to the lowermost guide portion 27. The part of the heat insulating wall 14 forms the upper side of the heat exchange room 9. Upper outlet ports 23 are formed on left and right sides of the part of the heat insulating wall 14. That is, the upper outlet ports 23 are formed at portions outside the part of the heat insulating wall 14 in the vehicle lateral direction.

The lower cover panel 19 includes: a center portion 24B which is erected along the vehicle lateral direction at a front portion of the engine room 12 and defines a front side of the engine room 12; side portions 25B which extend from both ends of the center portion 24B in the vehicle lateral direction toward rear outer sides in the vehicle lateral direction and define lateral sides of the engine room 12; and a lower portion (not shown in the drawing) which defines a lower side of the engine room 12. Side outlet ports 22B which are openings are formed in each side portion 25B such that the side outlet ports 22B extends frontward from an area in the vicinity of a rear end portion of the side portion 25B.

As shown in FIG. 3 and FIG. 4, the front side of the heat exchange room 9 is defined by the upper cover panel 13 which forms the above-mentioned upper region of the cover panel 11, and a rear side and the upper side of the heat exchange room 9 are defined by the heat insulating walls 14. The outdoor heat exchangers 8 are housed in the heat exchange room 9. One outdoor heat exchanger 8 is each disposed on a left side and a right side of the above-mentioned outdoor heat exchanger fans 16 in the vehicle lateral direction. Each outdoor heat exchanger 8 is disposed such that an inner end of the outdoor heat exchanger 8 in the vehicle lateral direction is positioned in the vicinity of a rear surface of the upper cover panel 13, and an outer end of the outdoor heat exchanger 8 in the vehicle lateral direction is positioned in the vicinity of a front surface of the heat insulating wall 14. The illustration of the cover panel 11 is omitted in FIG. 4.

As shown in FIG. 3 and FIG. 4, the front side of the engine room 12 is defined by the lower cover panel 19 which forms the above-mentioned lower region of the cover panel 11. The lower cover panel 19 is detachable so that the lower cover panel 19 is removed when performing maintenance of components in the engine room 12. In the inside of the engine room 12, a compressor 15, the sub-engine 10 for driving the compressor 15, a power generator 17 which converts a rotational energy of the sub-engine 10 into electrical energy, a transmission 18 which is disposed between the sub-engine 10 and the power generator 17 and changes a rotational speed of the sub-engine 10, a battery 20 which stores electric power generated by the power generator 17, and a control box 21 which houses a control device (not shown in the drawing) for controlling the compressor 15 and the like are housed. Electric power generated by the power generator 17 by driving the sub-engine 10 is stored in the battery 20. Electric power stored in the battery 20 is supplied to a motor (not shown in the drawing) for driving the compressor 15 in response to an instruction from the control device. When electric power is supplied to the motor, the compressor 15 is driven by a drive force of the motor. An air guide fan 28 is disposed in the engine room 12 so that inside of the engine room 12 is cooled by the air guide fan 28.

Next, a flow of air introduced into the heat exchange room 9 through the outdoor heat exchanger fans 16 is described with reference to FIG. 4.

As indicated by solid line arrows in FIG. 4, air (outside air) introduced into the heat exchange room 9 through the outdoor heat exchanger fans 16 is directed rearward, and impinges on the heat insulating wall 14 which defines the rear side of the heat exchange room 9. When the air impinges on the heat insulating wall 14, the air is divided into lateral flows in the vehicle lateral direction. The divided airflows respectively flow along the heat insulating wall 14 (from the center of the heat insulating wall 14 in the vehicle lateral direction to the outer sides of the heat insulating wall 14 in the vehicle lateral direction), and pass through the outdoor heat exchangers 8. The air which passes through the outdoor heat exchangers 8 directly flows to the outer sides in the vehicle lateral direction, and is discharged to the outside of the heat exchange room 9 through the side outlet ports 22A.

Airflows which impinge on the heat insulating wall 14 and flow obliquely frontward respectively pass through the outdoor heat exchangers 8, and impinge on an inner surface of the upper cover panel 13. The airflows which impinge on the upper cover panel 13 flow to the outer sides in the vehicle lateral direction along the guide portions 27 formed on the inner surface of the upper cover panel 13 (see FIG. 5). The guide portions 27 are formed such that the inner end side of the guide portions 27 is positioned slightly below the outer end side of the guide portions 27 and hence, air which flows along the guide portions 27 is guided further upward as the air flows to the outer side in the vehicle lateral direction. The air which is guided by the guide portions 27 is discharged to the outside of the heat exchange room 9 through the side outlet port 22A. Air which impinges on the heat insulating wall 14 and flows upward is discharged to the outside of the heat exchange room 9 through the upper outlet ports 23 formed in left and right sides of the part of the heat insulating wall 14 forming the upper side of the heat exchange room 9.

The following advantageous effects can be acquired. The outside air is introduced into the heat exchange room 9 by the outdoor heat exchanger fans 16, the front side of the heat exchange room 9 is defined by the upper cover panel 13, and the outdoor heat exchanger fans 16 are mounted on the center portion 24A disposed on substantially the center of the upper cover panel 13 in the vehicle lateral direction. Outside air which passes through the outdoor heat exchangers 8 is discharged to the outside of the heat exchange room 9 through the side outlet ports 22A, and the side outlet ports 22A are formed in the side portions 25A which define the lateral sides of the heat exchange room 9. As described above, the outdoor heat exchanger fans 16 for introducing outside air and the side outlet ports 22A through which outside air is discharged are disposed at positions away from each other and hence, outside air discharged through the side outlet port 22A is minimally taken in by the outdoor heat exchanger fan 16 again, whereby outside air guided from the outdoor heat exchanger fan 16 to the outdoor heat exchanger 8 does not contain exhaust heat from the outdoor heat exchanger 8, thus having a relatively low temperature. Accordingly, it is possible to prevent an adverse effect on operation point of the chilling cycle caused by introducing air of high temperature to the outdoor heat exchanger 8 and narrowing of an operation range under high load cooling operation.

Further not part of the claimed invention, the gap shields 40 and the air deflector 50 are mounted on the vehicle 2. That is, the air deflecting members are mounted on the vehicle 2 so as to prevent intrusion of vehicle traveling wind into a front portion of the van trailer body 5 during the traveling of the vehicle, thus reducing air resistance. Outside air is discharged from the outer sides of the casing 6 in the vehicle lateral direction and hence, the outside air discharged through the side outlet port 22A does not flow into a space defined between the air deflecting members and the casing 6, whereby the outside air discharged through the side outlet port 22A is minimally taken in by the outdoor heat exchanger fan 16. Accordingly, it is possible to reduce air resistance during the traveling of the vehicle by the gap shields 40 and the air deflector 50 and, at the same time, it is also possible to prevent an adverse effect on operation point of the chilling cycle caused by introducing air of high temperature to the outdoor heat exchanger 8 and narrowing of an operation range under high load cooling operation. For example, in a vehicle equipped with the gap shields 40, when an outlet port is formed so as to open in a front side of the chilling unit 1, as indicated by broken line arrows in FIG. 4, discharged air impinges on the gap shields 40, and flows to the inner side in the vehicle lateral direction. When air flows to the inner side in the vehicle lateral direction, the air is introduced into the casing 6 again through the outdoor heat exchanger fan 16 mounted on substantially the center in the vehicle lateral direction of the front side of the chilling unit 1, thus giving rise to a possibility of an adverse effect on operation point of the chilling cycle. On the other hand, according to the embodiment of the present invention, it is possible to prevent an adverse effect on operation point of the chilling cycle.

The side outlet ports 22A are formed at positions behind the rear ends of the gap shields 40. With such a configuration, for example, in a case where air flows from a front side of the vehicle to a rear side of the vehicle such as a case where the vehicle travels, air discharged through the side outlet port 22A is conveyed rearward from the side outlet port 22A by air flowing from the front side to the rear side of the vehicle so that the air does not impinge on the gap shield 40. Accordingly, it is possible to prevent that air discharged through the side outlet port 22A impinges on the gap shield 40, thus flowing to the inner side in the vehicle lateral direction.

Further, the casing 6 of the chilling unit 1 is partitioned into two spaces by the partition wall 7, and the sub-engine 10 is housed in the engine room 12 which is one of the two spaces. With such a configuration, noise emitted from the sub-engine 10 can be blocked by the partition wall 7. Accordingly, noise emitted from the chilling unit 1 can be reduced.

The upper outlet ports 23 are formed in the upper side of the casing 6. With such a configuration, outside air which is introduced into the heat exchange room 9 by the outdoor heat exchanger fan 16, and passes through the outdoor heat exchanger 8 is divided into flows directing to the side outlet ports 22A formed in the lateral sides of the heat exchange room 9 and flows directing to the upper outlet ports 23 formed in the upper side of the heat exchange room 9, and the divided airflows are respectively discharged to the outside of the heat exchange room 9 through the respective outlet ports. Accordingly, even when a large amount of outside air is introduced into the heat exchange room 9, the outside air is divided into air flows and the divided airflows are favorably discharged to the outside of the heat exchange room 9 and hence, the outdoor heat exchangers 8 can be cooled with a large amount of outside air. Further, also in a condition where outside air cannot be discharged to the outside of the heat exchange room 9 through either one of the side outlet ports 22A or the upper outlet ports 23, outside air can be discharged through the other of the side outlet ports 22A or the upper outlet ports 23.

The guide portions 27 are formed on the rear surface of the upper cover panel 13 which defines the front side of the heat exchange room 9 such that the guide portions 27 are recessed frontward. With such a configuration, outside air which is introduced into the heat exchange room 9, passes through the outdoor heat exchanger 8 and impinges on the upper cover panel 13 easily flows to the outer side in the vehicle lateral direction along the rear surface of the upper cover panel 13. Accordingly, outside air can be easily discharged through the side outlet ports 22A formed in the outer sides of the heat exchange room 9 in the vehicle lateral direction so that stagnation of outside air in the heat exchange room 9 can be suppressed.

The guide portions 27 are formed such that the inner end side of the guide portions 27 is positioned slightly below the outer end side of the guide portions 27. Accordingly, air which is guided from the inner end side to the outer end side of the guide portions 27 is directed to the outside, and is also guided upward. With such a configuration, outside air is guided to an upper side where a flow speed is high so that the outside air can be favorably discharged and hence, stagnation of outside air in the heat exchange room 9 can be suppressed.

The present invention is not limited to the invention described in the above-mentioned embodiment, and various modifications are conceivable without departing from the scope of the appended claims. For example, in this embodiment, an axial flow fan is used for introducing outside air to the outdoor heat exchangers 8. However, a fan for introducing outside air to the outdoor heat exchanger 8 may be a centrifugal fan or a fan of another type.

In this embodiment, one outdoor heat exchanger 8 is disposed on both sides of the outdoor heat exchanger fans 16. However, one outdoor heat exchanger 8 may be disposed only on one side of the outdoor heat exchanger fans. Alternatively, a plurality of outdoor heat exchangers 8 may be disposed on one side of the outdoor heat exchanger fans 16, or a plurality of outdoor heat exchangers 8 may be disposed on each of both sides of the outdoor heat exchanger fans 16.

### Reference Signs List

- 1: chilling unit (transport chilling unit)
- 2: vehicle
- 5: van trailer body
- 6: casing
- 7: partition wall
- 8: outdoor heat exchanger
- 9: heat exchange room
- 10: sub-engine
- 11: cover panel
- 12: engine room
- 13: upper cover panel
- 16: outdoor heat exchanger fan (fan)
- 22A: side outlet port
- 23: upper outlet port
- 24A: center portion
- 25A: side portion
- 27: guide portion
- 40: gap shield
- 50: air deflector

## Claims

1. A transport chilling unit (1) comprising:
an outdoor heat exchanger (8);
a casing (6) for housing the outdoor heat exchanger, and
a fan (16) configured to introduce outside air into the casing and to guide outside air to the outdoor heat exchanger wherein
the casing has a cover panel (11, 13) having a center portion (24A) and side portions (25A), the center portion configured to define a front side of a heat exchange room (9) in a direction of introducing outside air, the heat exchange room being formed inside the casing, and the side portions (25A) being configured to define lateral sides of the heat exchange room and extending from end portions of the center portion (24A) in a lateral direction, the lateral direction intersecting with the direction of introducing outside air,
the fan (16) is mounted on a center of the center portion (24A) in the lateral direction, and
side outlet ports (22A) configured to discharge outside air which passes through the outdoor heat exchanger (8) to an outside of the casing, the side outlet ports (22A) being formed in the side portions (25A) and extending frontward from rear end portions of the side portions (25A),
**characterized in that** guide portions (27) are formed on each side portion (25A), on a rear surface of the cover panel (11, 13) so as to guide outside air which passes through the outdoor heat exchanger (8) to an outer side in the lateral direction.

2. The transport chilling unit according to claim 1, wherein
an upper outlet port (23) is formed in an upper side of the casing (6) so as to discharge outside air which passes through the outdoor heat exchanger (8).

3. The transport chilling unit according to claim 1 or 2, wherein
the guide portion (27) is configured to guide outside air obliquely upward.

## Patentansprüche

1. Transportkühleinheit (1), die Folgendes umfasst:
einen Außenwärmetauscher (8);
ein Gehäuse (6) zum Aufnehmen des Außenwärmetauschers, und
ein Gebläse (16), das dazu ausgelegt ist, Außenluft in das Gehäuse einzuleiten und Außenluft zum Außenwärmetauscher zu führen, wobei
das Gehäuse ein Abdeckungspaneel (11, 13) mit einem Mittenabschnitt (24A) und Seitenabschnitten (25A) aufweist, wobei der Mittenabschnitt dazu ausgelegt ist, eine Vorderseite eines Wärmetauschraums (9) in eine Richtung des Einleitens von Außenluft zu definieren, wobei der Wärmetauschraum im Gehäuse gebildet ist und wobei die Seitenabschnitte (25A) dazu ausgelegt sind, seitliche Seiten des Wärmetauschraums zu definieren, und sich von Endabschnitten des Mittenabschnitts (24A) in eine Seitenrichtung erstrecken, wobei die Seitenrichtung die Richtung des Einleitens von Außenluft schneidet,
das Gebläse (16) in einer Mitte des Mittenabschnitts (24A) in der Seitenrichtung montiert ist, und
Seitenauslassöffnungen (22A), die dazu ausgelegt sind, Außenluft, die durch den Außenwärmetauscher (8) geleitet wird, zu einer Außenseite des Gehäuses abzuführen, wobei die Seitenauslassöffnungen (22A) in den Seitenabschnitten (25A) gebildet sind und sich von Endabschnitten der Seitenabschnitte (25A) nach vorn erstrecken,
**dadurch gekennzeichnet ist, dass** auf einer hinteren Fläche des Abdeckungspaneels (11, 13) in jedem Seitenabschnitt (25A) Führungsabschnitte (27) gebildet sind, um Außenluft, die durch den Außenwärmetauscher (8) geleitet wird, in die Seitenrichtung zu einer Außenseite zu führen.

2. Transportkühleinheit nach Anspruch 1, wobei
in einer Oberseite des Gehäuses (6) eine obere Auslassöffnung (23) gebildet ist, um Außenluft, die durch den Außenwärmetauscher (8) geleitet wird, abzuführen.

3. Transportkühleinheit nach Anspruch 1 oder 2, wobei
der Führungsabschnitt (27) dazu ausgelegt ist, Außenluft schräg nach oben zu führen.

## Revendications

1. Unité de refroidissement de transport (1) comprenant :
un échangeur de chaleur extérieur (8) ;
un boîtier (6) pour loger l'échangeur de chaleur extérieur, et
un ventilateur (16) configuré pour introduire l'air extérieur dans le boîtier et pour guider l'air extérieur vers l'échangeur de chaleur extérieur, dans laquelle :
le boîtier a un panneau de couvercle (11, 13) ayant une partie centrale (24A) et des parties latérales (25A), la partie centrale étant configurée pour définir un côté avant d'un compartiment d'échange de chaleur (9) dans une direction d'introduction d'air extérieur, le compartiment d'échange de chaleur étant formé à l'intérieur du boîtier, et les parties latérales (25A) étant configurées pour définir les côtés latéraux du compartiment d'échange de chaleur et s'étendant à partir des parties d'extrémité de la partie centrale (24A) dans une direction latérale, la direction latérale coupant la direction d'introduction d'air extérieur,
le ventilateur (16) est monté sur un centre de la partie centrale (24A) dans la direction latérale, et
des orifices de sortie latéraux (22A) configurés pour décharger l'air extérieur qui passe par l'échangeur de chaleur extérieur (8) jusqu'à un extérieur du boîtier, les orifices de sortie latéraux (22A) étant formés dans les parties latérales (25A) et s'étendant vers l'avant à partir des parties d'extrémité arrière des parties latérales (25A),
**caractérisé en ce que** des parties de guidage (27) sont formées sur chaque partie latérale (25A), sur une surface arrière du panneau de couvercle (11, 13) afin de guider l'air extérieur qui passe par l'échangeur de chaleur extérieur (8) jusqu'à un côté externe dans la direction latérale.

2. Unité de refroidissement de transport selon la revendication 1, dans laquelle :
un orifice de sortie supérieur (23) est formé dans un côté supérieur du boîtier (6) afin de décharger l'air extérieur qui passe par l'échangeur de chaleur extérieur (8).

3. Unité de refroidissement de transport selon la revendication 1 ou 2, dans laquelle :
la partie de guidage (27) est configurée pour guider l'air extérieur de manière oblique vers le haut.
